# EUROPÄISCHE PATENTSCHRIFT

(11) **EP 1 656 225 B1**
(45) Veröffentlichungstag und Bekanntmachung des Hinweises auf die Patenterteilung: **22.04.2015**
(21) Anmeldenummer: 03818073.3
(22) Anmeldetag: 13.08.2003
(51) Int. Cl.: B21H 1/12, F16C 33/64, B23P 15/00, B21H 1/06

(54) **VERFAHREN ZUR HERSTELLUNG VON INNEN- UND/ODER AUSSENPROFILIERTEN RINGEN SOWIE ANORDNUNG HIERZU**
METHOD FOR PRODUCING INTERNALLY OR EXTERNALLY PROFILED RINGS AND ARRANGEMENT THEREFOR
PROCEDE DE FABRICATION D'ANNEAUX PROFILES A L'INTERIEUR ET/OU A L'EXTERIEUR ET DISPOSITIF DESTINE A CET EFFET

(43) Veröffentlichungstag der Anmeldung: 17.05.2006
(73) Patentinhaber: Technische Universität Dresden, 01069 Dresden (DE)
(72) Erfinder: FICKER, Thomas, 08352 Raschau (DE); HARDTMANN, Andre, 01159 Dresden (DE); HOUSKA, Mario, 01855 Sebnitz (DE)
(74) Vertreter: Kailuweit & Uhlemann Patentanwälte Partnerschaft mbB
(86) Internationale Anmeldenummer: PCT/DE2003/002720
(87) Internationale Veröffentlichungsnummer: WO 2005/016575

(56) Entgegenhaltungen:
- EP-A- 1 029 614
- DD-A- 235 576
- DD-A- 291 259
- DE-A- 19 526 900
- DE-C- 10 219 441
- GB-A- 507 312
- US-A- 4 059 879
- US-A- 4 612 789
- US-A1- 2003 005 739
- DATABASE WPI Section PQ, Week 199317 Derwent Publications Ltd., London, GB; Class P52, AN 1993-142023 XP002042513 -& SU 1 733 171 A (KOSTYUK A S), 15. Mai 1992 (1992-05-15)

## Beschreibung

Die Erfindung betrifft Verfahren und Anordnung zur kombinierten umformenden und spanenden Fertigung von innen- und/oder außenprofilierten Ringen aus Rohr- oder Vollmaterial mittels Radial-Axial-Profilrohrwalzen in Kombination mit Drehen. Das Verfahren und die Anordnung dienen zur Herstellung von u. a. zylindrischen Anfangsringen, Wälzlagerringen und Getrieberingen o. dgl.

Die Herstellung profilierter Ringe, insbesondere Wälzlagerringe, aus vorzugsweise Rohrmaterial, erfolgt entweder rein spanend oder in einer Kombination spanender und umformender Bearbeitung.
Bei der rein spanenden Bearbeitung, die sehr materialintensiv ist, können im Abmessungsbereich kleiner 100 mm Außendurchmesser hochproduktive Mehrspindel-Drehautomaten zum Einsatz kommen, wobei durch Einring- bzw. Mehrringbearbeitung, vorzugsweise Zweiring-Bearbeitung, ein bzw. mehrere, vorzugsweise zwei, schleiffertig profilierte Ringe gleichzeitig ohne Umspannung von einer Maschine auf eine andere gefertigt werden können.

Bei bestimmten kombinierten Verfahren bestehend aus mindestens zwei Arbeitsgängen auf verschiedenartigen Maschinen wird zunächst ein sogenannter Blank, das heißt ein zylindrischer Anfangsring, von Rohrmaterial oder Stabstahl ausgehend ebenfalls rein spanend oder durch Kombination spanender und umformender Bearbeitung hergestellt, welcher anschließend durch Axial- oder Tangentialprofilringwalzen schleiffertig profiliert wird. Diese kombinierten Verfahren zur Herstellung profilierter Ringe sind gegenüber der rein spanenden Bearbeitung auf Mehrspindel-Drehautomaten materialsparender sowie in Bezug auf die Gebrauchseigenschaften günstiger, erfordern jedoch durch mindestens ein nochmaliges Einspannen des Blanks (Anfangsringes) zur Profilierung des Ringes einen erhöhten Arbeitszeitaufwand infolge der somit erforderlichen Bearbeitung auf mindestens zwei verschiedenartigen Maschinen bis zum Vorliegen eines schleiffertigen Ringes. Ein Beispiel für diese kombinierten Verfahren in mindestens zwei Arbeitsgängen ist in DE 198 49 182 A1 beschrieben, das als Zielstellung die Beeinflussung des verfahrensbedingten axialen bzw. tangentialen Werkstoffflusses hat. Die Werkstoffbeeinflussung setzt jedoch mindestens zwei Walzschritte (Arbeitsgänge) voraus, was ein bereits beschriebener wesentlicher Nachteil dieser Fertigungsmöglichkeit ist.

Der wirtschaftliche Anwendungsbereich genannter Verfahren liegt insbesondere im Abmessungsbereich größer 100 mm Außendurchmesser und umfasst überwiegend Außen- und Innenringe (Wälzlager- und Getrieberinge) mit symmetrischer Querschnittsform. Darüber hinaus gibt es Lösungsvorschläge (DE 197 43 055 A1, DE 199 20 163 A1) zur Fertigung von Ringen mit asymmetrischer Querschnittsform durch Tangentialprofilringwalzen, für die bisher jedoch keine Anwendung in der Praxis bekannt ist.

Weitere Herstellungsverfahren zur Fertigung profilierter Ringe gehen von einer Kombination zuerst umformender Bearbeitung durch Axialprofilrohrwalzen und/oder Walzeinstechen und anschließend spanender Fertigbearbeitung durch Drehen ausgehend von Rohrmaterial (DD 225 358 A1) bzw. zunächst spanender Vorbearbeitung von Rohrmaterial (DD 292 162 A5) bzw. Stabstahl (DD 292 161 A5) bei anschließender umformender Bearbeitung durch Axialprofilrohrwalzen und/oder Walzeinstechen sowie spanender Fertigbearbeitung eines Ringes in Folge und/oder parallel auf einem Mehrspindel-Drehautomaten mit integrierter Walzvorrichtung aus, betreffen jedoch ausschließlich außenprofilierte Ringe mit symmetrischer oder asymmetrischer Querschnittsform, wie z. B. Innenringe für Radial-Rillenkugellager oder Kegelrollenlager.

In DE 195 26 900 A1, die den nächstliegenden Stand der Technik für den Gegenstand des Anspruchs 5 bildet, werden spanende Verfahren wie Drehen und umformende Verfahren wie Axialprofilrohrwalzen und/oder Walzeinstechen so kombiniert, dass wenigstens ein Ring gleichzeitig innen bzw. außen umformend und/oder spanend schleiffertig profiliert werden kann, um somit neben der oben beschriebenen Fertigung von außenprofilierten Ringen, wie zum Beispiel Wälzlagerinnenringen, gleichfalls die Fertigung von innenprofilierten Ringen, wie zum Beispiel Wälzlageraußenringen, mit genannter Verfahrenskombination zu ermöglichen.
Für letztgenannten Herstellungsverfahren wird zur maschinentechnischen Umsetzung der Verfahrenskombination eine Maschine eingesetzt, welche die umformende Profilierung der Außen- und Innenkontur von Ringen bei spanender Fertigbearbeitung aller weiteren Form- und Flächenelemente des Ringes, einschließlich des Abtrennens des Ringes vom Rohr als letzter Arbeitsstufe in einem Arbeitsgang ohne Umspannung ermöglicht.
Vorteilhaft wird das unbearbeitete Rohr durch Außen-Überdrehen und/oder Innen-Ausdrehen vor dem Umformen durch Axialprofilrohrwalzen und/oder Walzeinstechen auf Maß vorgedreht, wobei gleichzeitig ggf. geforderten Mindestspanabnahmen bzw. vorhandener Randentkohlung des eingesetzten Ausgangsmateriales Rechnung getragen wird.
Das wirtschaftliche Anwendungsgebiet der Herstellungsverfahren zur kombinierten umformenden und spanenden Bearbeitung durch Axialprofilrohrwalzen/Walzeinstechen - Drehen zur Fertigung profilierter Ringe liegt im Abmessungsbereich von ca. 40 ... 160 mm Außendurchmesser und umfasst innen- und/oder außenprofilierte Ringe (Wälzlager- und Getrieberinge) mit sowohl symmetrischer als auch asymmetrischer Querschnittsform. Darüber hinaus besteht die Möglichkeit der Herstellung von Anfangsringen für die spanende oder umformende Weiterbearbeitung, z. B. durch Axial- bzw. Tangentialprofilringwalzen. Vorteilhaft ist das insbesondere dann, wenn die Anfangsringe für das nachfolgende Walzen vorprofiliert sein müssen, wie das beim Axial- bzw. Tangentialprofilringwalzen komplizierter Ringgeometrien unabdingbar ist.

Gemeinsam ist den in DD 225 358 A1, DD 292 162 A5, DD 292 161 A5 und DE 195 26 900 A1 dargestellten Fertigungsabläufen, dass beim Axialprofilrohrwalzen und/oder Walzeinstechen ein ungehinderter axialer Werkstofffluss auftritt. Folge ist, dass Rohr bzw. Ring während des Walzprozesses entsprechend dem durch das Werkzeugprofil verdrängten Werkstoffvolumens (bis zu 100%) länger bzw. breiter werden. Dieser Effekt wird im Sinne einer hohen Materialausnutzung und Wirtschaftlichkeit bei der Ringfertigung angestrebt. Bei der Bearbeitung von Ringen mit großen und tiefen Rechteckprofilen (nutähnliche Profile), wie z. B. bei Synchron-Getrieberingen oder Schaltmuffen führt dieser Effekt zu Problemen bei der Erzielung der geforderten Genauigkeiten (Symmetrien).

Die DD 291 259 A offenbart ein Verfahren zur Herstellung ringförmiger Teile aus Rohrmaterial. Dabei wird der zu fertigende Ring nach der umformenden Profilierung vollständig vom Rohr abgesprengt oder abgestochen und anschließend im verbleibenden gespannten Zustand spanend fertigbearbeitet. Die DD 291 259 A offenbart auch die Merkmale des Oberbegriffs des unabhängigen Anspruchs 5.

In der US 4,059,879 wird ein Verfahren zur Herstellung eines Lagerrings aus Metallpulver vorgestellt. Dabei wird zuerst ein poröser Metallring aus Metallpulver gesintert. Anschließend wird dieser auf einer Welle positioniert. Unter beidseitigem Druck in axialer Richtung wird dann eine Rille in den Ring eingebracht. Durch den beidseitigen axialen Druck wird eine Rissbildung und ein Fließen des porösen gesinterten Materials in axialer Richtung verhindert.
Die US 4,059,879 bildet den nächstliegenden Stand der Technik für den Gegenstand des Anspruchs 1.

In der GB 507,312 wird ein Verfahren und eine Anordnung zur Herstellung ringförmiger Körper vorgestellt. Dabei wird ein ringförmiger Körper auf einer Welle zwischen zwei Haltern positioniert, um ein Fließen des Ringes in axialer Richtung zu verhindern. Die Kontaktfläche der Halter zu dem ringförmigen Körper weist zudem im äußeren Bereich einen Grat auf, so dass sich bei dem ringförmigen Körper während des Walzens eine Phase bildet.
Auch mit dieser Lösung ist es nicht möglich, Ringe in einem Arbeitsgang aus Rohr- oder Vollmaterial zu fertigen, da - ebenso wie in der US 4,059,879 - zunächst in einem ersten Arbeitsgang ein Anfangswerkstück (Anfangsring) durch Axialprofilringwalzen hergestellt werden muss. Ebenso kann mit dieser Lösung kein größerer Durchmesser als der Ausgangsdurchmesser beim Walzen hergestellt werden. Wie auch bei der Vorrichtung gemäß US 4,059,879 bietet diese Vorrichtung keine Möglichkeit zur Herstellung innenprofilierter Ringe.

In der EP 1 029 614 A1 wird ein Verfahren zum Drückwalzen und eine dafür geeignete Vorrichtung vorgestellt. Dabei wird ein, in einem ersten Arbeitsgang hergestelltes Anfangswerkstück (überwiegend aus Grobblech) in ein Drückfutter eingelegt und von Drückrollen auf das Profil des Drückfutters gedrückt. Dabei wird zur Verhinderung eines Materialflusses in axialer Richtung das Werkstück auf der einen Seite durch eine ringförmige Anschlagvorrichtung und auf der anderen Seite durch eine Andrückscheibe gehalten.

Ebenso wie mit den Lösungen nach der US 4,059,879 und der GB 507,312 ist es auch mit dieser Vorrichtung nicht möglich, rohrförmiges Stangenmaterial oder Vollmaterial komplett zu bearbeiten. Es ist immer in einem ersten Arbeitsgang die Fertigung eines Anfangswerkstückes notwendig. Ebenso wie mit den Lösungen nach der DD 291 259 A und der US 4,059,879 ist es auch mit der vorgeschlagenen Vorrichtung nach der EP 1 029 614 A1 nicht möglich, Ringe mit einem größeren Außendurchmesser als dem des Anfangswerkstückes herzustellen.

Aufgabe der Erfindung ist es, Verfahren und Anordnung der eingangs genannten Art anzugeben, womit eine höhere Genauigkeit bei der Herstellung von Ringen mit großen und tiefen Rechteckprofilen (nutähnliche Profile), wie z. B. bei Synchron-Getrieberingen oder Schaltmuffen erreicht wird.

Erfindungsgemäß wird die Aufgabe mit den Merkmalen des Verfahrensanspruchs 1 gelöst. Dabei wird während des Walzens des Profiles eine Gegenkraft bezüglich der Fließrichtung des Rohrmaterials erzeugt, womit der Werkstofffluss in axialer und/oder radialer Richtung so steuerbar ist, dass der abfließende Werkstoff in die Ausbildung des Profiles einbezogen wird.

Durch die Erzeugung einer Gegenkraft oder eines Gegendruckes wird dem bisher ungehinderten axialen Werkstofffluss mit einer definiert aufzubringenden Kraft entgegengewirkt. Damit wird die Möglichkeit der Steuerung des Werkstoffflusses in wahlweise axiale und/oder radiale (zum Rohraußendurchmesser hin) Richtung geschaffen, womit die bisher z. B. bei der Fertigung von Synchron-Getrieberingen und Schaltmuffen aufgetretenen Probleme hinsichtlich Erzielung der geforderten Genauigkeiten, insbesondere hinsichtlich der Symmetrie von nutähnlichen Profilen, gelöst werden.

Vorteilhafte Varianten des Verfahrens ergeben sich aus den in den abhängigen Unteransprüchen genannten Merkmalen.

Die Aufgabe wird weiterhin durch eine Anordnung mit den Merkmalen des Anspruchs 5 gelöst, wobei das Innen-Profilwalzwerkzeug ein den Werkstofffluss begrenzendes axialverschiebbares Gegendruckwerkzeug aufweist, welches eine über den Außendurchmesser des InnenProfilwalzwerkzeuges überragende Auflagefläche für das umzuformende Rohr bildet, womit der Werkstofffluss in axialer und/oder radialer Richtung steuerbar ist.

Zur gezielten Steuerung des axialen Werkstoffflusses wird erfindungsgemäß zusätzlich die axiale Verschiebbarkeit der Außen-Profilwalzwerkzeuge durch ein hydraulisches und/oder mechanisches System gefördert bzw. eingeschränkt.

Vorteilhafte Varianten der Anordnung ergeben sich aus den in den unteransprüchen genannten Merkmalen.

Der Einsatz einer solchen Gegendruckeinrichtung (inkl. Walzdorn) führt zu einer maßgeblichen Erweiterung der bekannten Verfahrenskombination Axialprofilrohrwalzen (und/oder Walzeinstechen) - Drehen hin zu einer völlig neuartigen Verfahrenskombination "Radial-Axial-Profilrohrwalzen" und/oder Walzeinstechen - Drehen. Ein weiterer Vorteil dieser Verfahrenskombination mit steuerbarem axialen Werkstofffluss ist, dass aus einem Rohr "kleineren" Außendurchmessers Ringe mit (leicht) größerem Außendurchmesser hergestellt werden können, was aus dem jetzt gezielt steuerbaren radialen Werkstofffluss (zum Rohraußendurchmesser hin) resultiert. Durch Einsatz des Radial-Axial-Profilrohrwalzens ergeben sich Fertigungsmöglichkeiten für die Herstellung eines weitaus größeres Teilespektrums als mit den bisher bekannten Verfahren bzw. Lösungen.

Die Erfindung wird nachfolgend an Hand von Ausführungsbeispielen noch näher erläutert. In den Zeichnungen zeigen:
- Fig. 1: (Spindellage I): Außen-Überdrehen mit Überdrehwerkzeug und Innen-Ausdrehen mit Ausdrehwerkzeug des Rohres 1
- Fig. 2: (Spindellage II): (Außen-)Radial-Axial-Profilrohrwalzen/Walzeinstechen mit Profilwalzwerkzeug 2 und Gegendruckwerkzeug (inkl. Walzdorn) 5
- Fig. 3: (Spindellage III): Plandrehen (1. Ringseite) mit Plandrehwerkzeug, Innen-Ausdrehen (Nachdrehen) mit Ausdrehwerkzeug und CNC-Konturdrehen (Nachdrehen) mit Drehwerkzeug
- Fig. 4: (Spindellage IV): Abstechdrehen mit Abstechdrehwerkzeug des Synchron-Getrieberinges 4 und Plandrehen (2. Ringseite) mit Plandrehwerkzeug
- Fig. 5a: (Außen-)Radial-Axial-Profilrohrwalzen/Walzeinstechen mit Außen-Profilwalzwerkzeug 2 und Gegendruckwerkzeug (inkl. Walzdorn) 5 des Rohres 1 und derart profilierter Synchron-Getriebering 4
- Fig. 5b: mit entsprechend Fig. 5a dargestellter Werkzeugkonfiguration zur Steuerung des Werkstoffflusses in axiale bzw. radiale Richtung aus einem Anfangsrohr kleineren Durchmessers profilierter Synchron-Getriebering mit hochgewalztem Profil
- Fig. 6a: auf Ausgangsrohr 1 gewalztes Doppelprofil entsprechend Außenkontur zweier Synchron-Getrieberinge
- Fig. 6b: auf Ausgangsrohr 1 gewalztes Doppelprofil entsprechend Außenkontur zweier Synchron-Getrieberinge 4 bei Walzen mit sogenanntem Vorring
- Fig. 7a: Radial-Axial-Profilrohrwalzen/Walzeinstechen mit Außen-Profilwalzwerkzeug 2 und Innen-Profilwalzwerkzeug (inkl. Walzdorn) 3 des Ausgangsrohres 1 und derart profilierter Synchron-Getriebering 6
- Fig. 7b: mit entsprechend Fig. 7a dargestellter Werkzeugkonfiguration zur Steuerung des Werkstoffflusses in axiale bzw. radiale Richtung aus einem Anfangsrohr kleineren Durchmessers profilierter Synchron-Getriebering (mit Außen- und Innenprofil) größeren Durchmessers
- Fig. 8: schematische Darstellung einer Walzvorrichtung zur gezielten Steuerung des axialen und radialen Werkstoffflusses mit hydraulischer und/oder mechanischer Unterstützung

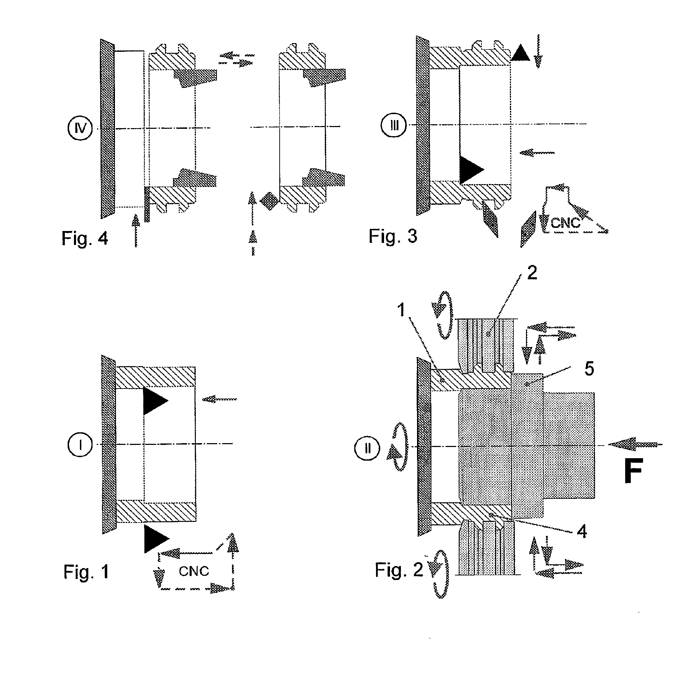

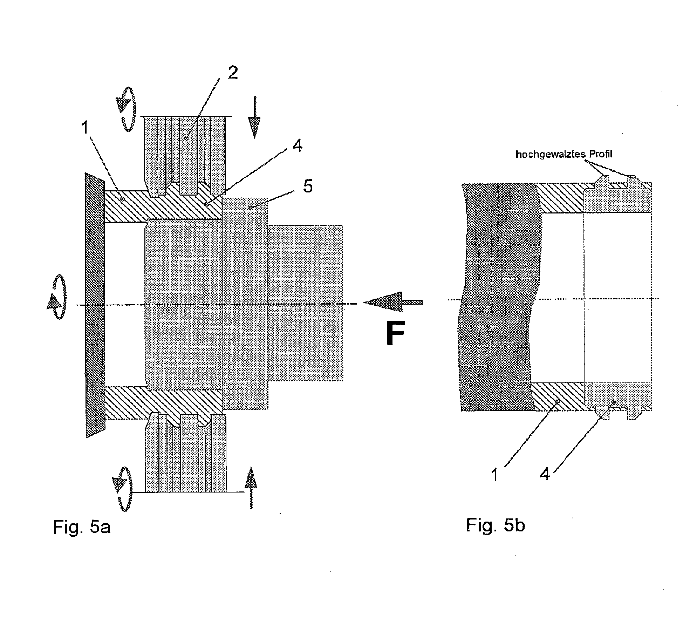

In den Figuren 1 bis 4 ist die erfindungsgemäße Kombination spanender und umformender Verfahren durch Radial-Axial-Profilrohrwalzen - Drehen mit Gegendruckeinrichtung zur Werkstoffflusssteuerung anhand des zugehörigen Fertigungsablaufes (Einring-Bearbeitung) entsprechend der Spindellagen I bis IV eines Vierspindel-Drehautomaten mit integrierter Walzvorrichtung am Beispiel eines Synchron-Getrieberinges ausgehend von Rohr in einer Aufspannung dargestellt.
In Spindellage I wird zunächst ein Außen-Überdrehen und Innen-Ausdrehen des eingesetzten Ausgangsrohres 1 durchgeführt. In Spindellage II erfolgt das (Außen-)Radial-Axial-Profilrohrwalzen/Walzeinstechen mit Profilwalzwerkzeug 2 entsprechend der Außenkontur eines Synchron-Getrieberinges mit Gegendruckwerkzeug (inkl. Walzdorn) 5 (siehe auch Fig. 5a) zur Steuerung des Werkstoffflusses, wodurch im betrachteten Anwendungsfall der axiale Werkstofffluss teilweise behindert und infolgedessen teilweise in radiale Richtung geleitet wird. Damit wird möglich, aus einem Rohr 1 kleineren Durchmessers einen Synchron-Getriebering 4 (leicht) größeren Durchmessers (siehe Fig. 5b) zu fertigen. Der zugelassene axiale Werkstofffluss ist beim Rohrvorschub zwecks Sicherung der geforderten Werkstückbreite zu berücksichtigen.

In den Spindellagen III und IV erfolgt die spanende Fertigbearbeitung der restlichen Form- bzw. Flächenelemente des Ringes mit dem Abtrennen des komplett schleiffertig profilierten Synchron-Getriebringes 4 vom Rohr 1 als letzter Arbeitsstufe.
Dabei werden in Spindellage III Plandrehen der 1. Ringseite, Innen-Ausdrehen und CNC-Konturdrehen der Außenkontur durchgeführt. Bei den beiden letztgenannten Arbeitsstufen handelt es sich lediglich um Nachdrehoperationen. Beim nochmaligen Innen-Ausdrehen wird die Beseitigung der infolge des Radial-Axial-Profilrohrwalzens hervorgerufenen "Walzspuren" im Rohr- bzw. Ringinnendurchmesser vorgenommen. Das CNC-Konturdrehen ist eine reine "Sicherheitsmaßnahme" und dient nur der Gewährleistung einer 100%-igen Sicherheit der Erzielung der Genauigkeitsforderungen. In der Regel ist das CNC-Konturdrehen nicht notwendig, da die geforderten Genauigkeiten der Außenkontur beim Radial-Axial-Profilrohrwalzen, gewährleistet durch Einsatz der Gegendruckeinrichtung, erreicht werden. In Spindellage IV erfolgen das Abstechen des komplett schleiffertig profilierten Synchron-Getrieberinges 4 vom Rohr 1 sowie das Plandrehen der 2. Ringseite.

Das in Spindellage I dargestellte Außen-Überdrehen bzw. Innen-Ausdrehen ist bei Verwendung von Ausgangsmaterial mit der entsprechenden Oberflächenqualität sowie dem der Arbeitsaufgabe entsprechenden Außen- bzw. Innendurchmesser nicht in jedem Fall notwendig, wobei durch Radial-Axial-Profilrohrwalzen/Walzeinstechen die Maße des Außen- bzw. Innendurchmessers in einem geringen Toleranzbereich veränderbar sind.

Soll mit dem in den Figuren 1 bis 4 beschriebenen Fertigungsablauf z. B. eine Schaltmuffe mit Innenverzahnung hergestellt werden, kann deren Außenkontur komplett schleiffertig gewalzt werden, während die Verzahnung im Innendurchmesser spanend auf einer nachgeschalteten Einrichtung in einem separaten Arbeitsgang erfolgt, wobei vorteilhaft eine Verkettung der Einrichtungen realisiert wird.

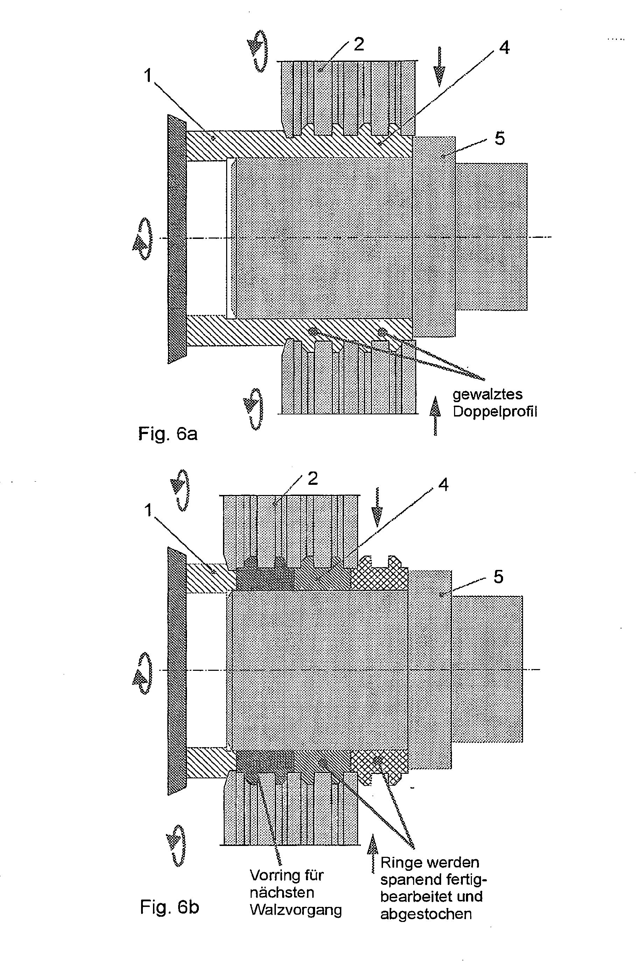

Der in den Figuren 1 bis 4 dargestellte Fertigungsablauf ist auch bei Realisierung einer Zweiring- oder Mehrringbearbeitung möglich, das heißt, in diesem Fall wird das Radial-Axial-Profilrohrwalzen mit Profilwalzwerkzeugen entsprechend der Außenkontur zweier oder mehrerer Synchron-Getrieberinge durchgeführt. Vorteilhaft ist hierfür das Walzen mit sogenanntem "Vorring" (Fig. 6). Das bedeutet, dass zunächst - ein am Rohr verbleibendes Ringprofil - durch (Radial-)Axialprofilrohrwalzen gewalzt wird, hinter welchem sich das Walzen z. B. zweier weiterer Ringprofile anschließt, so dass sich drei gewalzte Ringprofile auf dem Rohr befinden. Das dritte Ringprofil verbleibt, während die beiden vorgelagerten Ringprofile spanend fertigbearbeitet und anschließend vom Rohr abgetrennt werden, am Rohr und bildet beim sich in Folge wiederholenden Fertigungsablauf den "Vorring". Dadurch wird der Walzprozess beträchtlich stabilisiert, da ein Walzen am Rohranfang vermieden wird und der Werkzeugeingriff nicht direkt am Rohranfang, sondern im Abstand mindestens einer Ringbreite vom Rohranfang versetzt, erfolgt. Damit können auch bei einer MehrringBearbeitung die Genauigkeitsanforderungen problemlos gesichert werden. Durch das Walzen mit "Vorring" wird eine gegenseitige Beeinflussung der einzelnen Ringprofile infolge des axialen Werkstoffflusses vermieden. Diese Variante ist sowohl mit als auch ohne Verwendung einer Gegendruckeinrichtung realisierbar.

Der im Ausführungsbeispiel für vorzugsweise Rohrmaterial aufgezeigte Fertigungsablauf ist in modifizierter Weise gleichfalls bei Einsatz von Stabstahl als Ausgangsmaterial, insbesondere für kleinere Ringabmessungen, möglich.

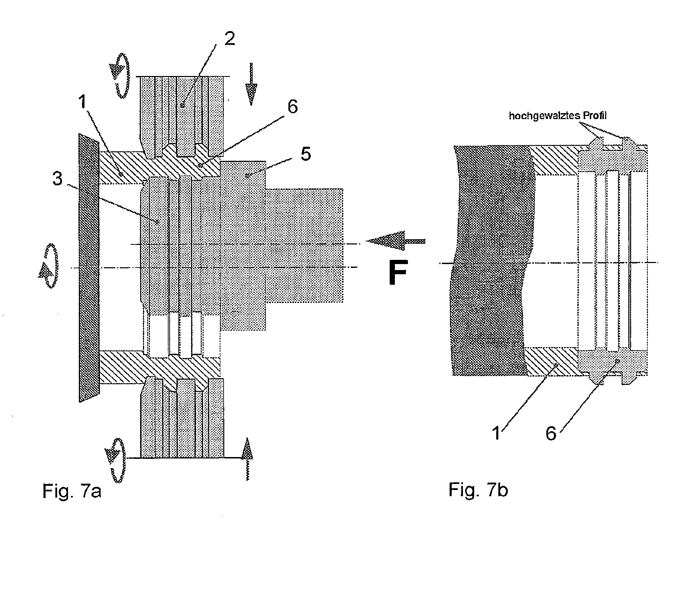

Soll ein Werkstück wie z. B. der in den Figuren 1 bis 4 aufgezeigte Synchron-Getriebering gefertigt werden, welches zusätzlich ein umlaufendes Innenprofil 6 aufweist, besteht die Möglichkeit durch entsprechende Verfahrensgestaltung die Innen- und Außenkontur des Ringes gleichzeitig entweder umformend durch Radial-Axial-Profilrohrwalzen und/oder Walzeinstechen bzw. eine der beiden Konturen rein spanend durch Drehen in Folge und/oder parallel herzustellen. Dabei können gleichfalls alle Arbeitsstufen in einem Arbeitsgang auf einer Maschine einschließlich des Abtrennens des komplett schleiffertig profilierten Ringes vom Rohr als letzter Arbeitsstufe durchgeführt werden. Fig. 7 zeigt das Radial-Axial-Profilrohrwalzen gleichzeitig der Außen- und Innenkontur eines derartigen Werkstückes.
Für die maschinentechnische Umsetzung des in den Figuren 1 bis 4 aufgezeigten Fertigungsablaufes gibt es zwei vorteilhafte Anordnungsvarianten.

Zum einen wird die Aufgabe erfindungsgemäß mit einer Anordnung, die von der in DE 195 26 900 A1 beschrieben ausgeht, gelöst. Hierbei ist auf einem an sich bekannten Mehrspindel-Drehautomaten in einer Spindellage eine Walzvorrichtung vorgesehen.

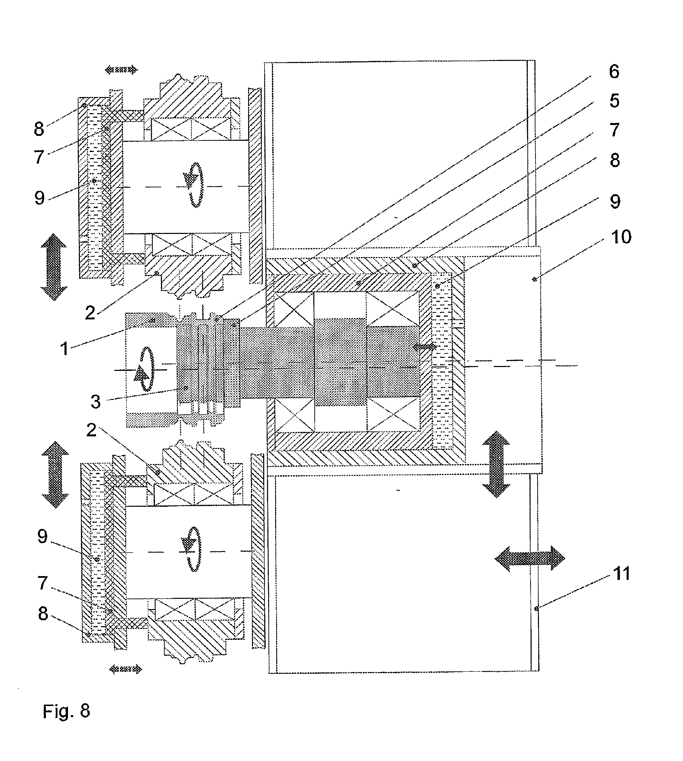

Die Walzvorrichtung weist diametral angeordnete, axial verschiebbar gelagerte, wahlweise angetriebene oder nicht angetriebene Außen-Profilwalzwerkzeuge auf, welche zur Vermeidung radialer Kräfte auf die Spindellagerung auf einer gemeinsamen Grundplatte angeordnet sind. Die axiale Verschiebbarkeit der Außen-Profilwalzwerkzeuge kann dabei in Abhängigkeit vom Anwendungsfall durch ein hydraulisches und/oder mechanisches System gefördert bzw. eingeschränkt werden, so dass eine gezielte Steuerung des axialen Werkstoffflusses möglich ist. Die Außen-Profilwalzwerkzeuge sind mit einer radialen Vorschubkraft zustellbar, die das Eindringen in das Rohr bewirken. In Spindellage II ist für die Aufnahme entweder eines wahlweise angetriebenen oder nicht angetriebenen Innenprofilwalzwerkzeuges ein Kreuzschlitten 10 auf einen weiteren Kreuzschlitten 11 installiert, um mit einer radialen Vorschubkraft dessen Eindringen in das Rohr zu realisieren. In Zusammenhang damit oder auch separat kann von dem Kreuzschlitten 10 die Gegendruckeinrichtung (inkl. Walzdorn) aufgenommen werden, wobei der Gegendruck selbst z. B. über ein zusätzlich zu integrierendes hydraulisches und/oder mechanisches System definiert aufgebracht wird. Dieses zusätzliche System ist in Fig. 8 als Hydrauliksystem ausgeführt. Je nach Größe des Druckes des Hydraulikmediums 9 im Hydraulikzylinder 8 kann über Hydraulikkolben 7 und Gegendruckwerkzeug 5 der axiale Werkstofffluss zum Rohranfang hin vermindert oder zur Einspannstelle hin "umgekehrt" werden. Gleichzeitig wird dadurch ein radialer Werkstofffluss zum Außendurchmesser hin ermöglicht. Durch die richtige Wahl des während des Walzvorganges veränderlichen Hydraulikdruckes werden die notwendigen Genauigkeiten hinsichtlich Maßhaltigkeit, insbesondere Symmetrie, der nutähnlichen Profile gewährleistet.

Vorteilhaft für die maschinentechnische Umsetzung einer als Radial-Axial-Profilrohrwalzen bezeichneten Verfahrenskombination ist eine speziell hierauf zugeschnittene Anordnung auf Basis eines (Mehrspindel-)Drehautomaten mit integrierter Walzvorrichtung. Eine einfache Lösung stellt eine einspindlige Maschine dar, wobei der Aufbau einem Baukastenprinzip Rechnung trägt, sobald eine wahlweise Auf- und Abrüstung der Maschine mit Spindellagen, Walzvorrichtungen und Dreheinheiten in Abhängigkeit vom Kompliziertheitsgrad des zu fertigenden Ringes gewährleistet ist.

Wesentlich bei der erfindungsgemäßen Anordnung ist, dass gleichzeitig Innen- und/oder Außenprofil eines Ringes in einer Aufspannung umformend und/oder spanend profiliert werden können, wobei das Abtrennen des komplett schleiffertig profilierten Ringes vom Rohr in jedem Fall die letzte Arbeitsstufe darstellt.

Es ist außerdem möglich, die maschinentechnische Umsetzung der Verfahrenskombination Radial-Axial-Profilrohrwalzen - Drehen auf mehreren miteinander verketteten modifizierten Profilwalzmaschinen und Drehmaschinen, wenigstens jedoch mit einer Profilwalzmaschine und einer Drehmaschine zu realisieren. Die hierzu eingesetzte Profilwalzmaschine wird so ausgestaltet, dass sie der Darstellung der in Figur 8 gezeigten Walzvorrichtung entspricht.

Die wesentlichen Merkmale dieser Anordnung bestehen darin, dass einer Profilwalzmaschine ein (oder mehrere) spanende Bearbeitungseinrichtungen bzw. Drehmaschinen zugeordnet sind, die den Ring nach der umformenden Profilierung durch Radial-Axial-Profilrohrwalzen sofort umformend und/oder spanend vom Rohr abtrennen und die spanende Fertigbearbeitung des Ringes erst im bereits vom Rohr "abgetrennten" Zustand erfolgt. Dabei wird der abgetrennte - vorprofilierte - Ring von den nachgeschalteten spanenden Bearbeitungseinrichtungen bzw. Drehmaschinen ohne Zwischenlagerung übernommen.

Während das erste Variante insbesondere für "kleinere" Ringabmessungen (ca. 40 ... 100 mm Außendurchmesser) geeignet ist, kommt das zweite Variante insbesondere für "größere" Ringabmessungen (ca. 100 ... 160 mm) in Betracht. Prinzipiell sind jedoch beide Anordnungsvarianten für einen Abmessungsbereich von ca. 40 ... 160 mm Außendurchmesser sowohl technisch als auch wirtschaftlich geeignet. Eine Erweiterung auf Außendurchmesserbereiche größer 160 mm ist möglich.

### Bezugszeichenliste

- 1: - Rohr
- 2: - Außen-Profilwalzwerkzeug
- 3: - Innen-Profilwalzwerkzeug
- 4: - Synchron-Getriebering (ohne Innenprofil)
- 5: - Gegendruckwerkzeug (inkl. Walzdorn)
- 6: - Synchron-Getriebering mit Innenprofil
- 7: - Hydraulikkolben
- 8: - Hydraulikzylinder
- 9: - Hydraulikmedium
- 10: - Kreuzschlitten (vertikal beweglich)
- 11: - Kreuzschlitten (horizontal beweglich)

## Patentansprüche

1. Verfahren zur Herstellung von innen- und/oder außenprofilierten Ringen in komplett schleiffertigem Zustand aus Rohr- oder Vollmaterial, bei dem spanende Verfahren und das Radial-Axial-Profilrohrwalzen und/oder Walzeinstechen in Folge und/oder parallel miteinander kombiniert werden, wobei während des Walzens des Profils eine Gegenkraft bezüglich der axialen Fließrichtung des Rohrmateriats (1) erzeugt wird, womit der Werkstofffluss in axialer und/oder radialer Richtung so steuerbar ist, dass der abfließende Werkstoff in die Ausbildung des Profils einbezogen wird und die Steuerung des axialen Werkstoffflusses weiterhin über eine zusätzliche Förderung oder Einschränkung der axialen Verschiebbarkeit der Außen-Profilwalzwerkzeuge (2) durch hydraulische und/oder mechanische Mittel ealisiert wird.

2. Verfahren nach Anspruch 1, **dadurch gekennzeichnet, dass** die Steuerung des Werkstoff flusses über ein Gegendruckwerkzeug (5) erfolgt, welches einem ungehinderten axialen Werkstofffluss mit definiert aufzubringender Kraft entgegenwirkt und infolgedessen den Werkstofffluss wahlweise in axiale und/oder radiale Richtung erzeugt.

3. Verfahren nach einem der Ansprüche 1 oder 2, **dadurch gekennzeichnet, dass** zur Realisierung einer Zweiring- oder Mehrringbearbeitung entsprechend der Außenkontur gleichzeitig zweier oder mehrerer Ringe mit einem Vorring gewalzt wird, indem zunächst ein am Rohr verbleibendes Ringprofil durch (Radial-)Axialprofilrohrwalzen und/oder Walzeinstechen gewalzt wird, woran sich das Walzen weiterer Ringprofile anschließt, so dass mehrere gewalzte Ringprofile auf dem Rohr (1) erzeugt werden, wobei das letzte Ringprofil, während die vorgelagerten Ringprofile spanend fertigbearbeitet und anschließend vom Rohr abgetrennt werden, am Rohr verbleibt und beim sich in Folge wiederholenden Fertigungsablauf den Vorring bildet.

4. Verfahren nach einem der Ansprüche 1 bis 3, **dadurch gekennzeichnet, dass** die Innenund/oder Außenprofilierung des Ringes in einer Aufspannung durchgeführt wird.

5. Anordnung zur Durchführung eines Verfahrens zur Herstellung von innen- und/oder außenprofilierten Ringen in komplett schleiffertigem Zustand aus Rohr- oder Vollmaterial, bei dem spanende Verfahren und das Radial-Axial-Profilrohrwalzen und/oder Walzeinstechen in Folge und/oder parallel miteinander kombiniert werden, wobei die Anordnung ein Innen-Profilwerkzeug (3) und mindestens ein Außen-Profilwerkzeung (2) aufweist, **dadurch gekennzeichnet, dass** das Innen-Profilwerkzeug ein den Werkstofffluss begrenzendes axialverschiebbares Gegendruckwerkzeug (5) aufweist, welches eine über den Außendurchmesser des Innen-Profilwerkzeugs (3) überragende Auflagefläche für das umzuformende Rohr (1) bildet womit der Werkstofffluss in axialer Richtung und/oder in radialer Richtung steuerbar ist, sowie das Außen-Profilwerkzeug durch ein hydraulisches und/oder mechanisches System in seiner axialen Verschiebbarkeit gefördert bzw. eingeschränkt und so der axiale Werkstofffluss gezielt gesteuert wird.

6. Anordnung für das Radial-Axial-Profilrohrwalzen und/oder das Walzeinstechen nach Anspruch 1 oder 5, mit mindestens einem Außen-Profilwalzwerkzeug (2) und mit einem Gegendruckwerkzeug (5) zur Steuerung des Werkstoffflusses, wodurch der axiale Werkstofffluss teilweise behindert und infolgedessen teilweise in radiale Richtung geleitet wird.

7. Anordnung für das Radial-Axial-Profilrohrwalzen und/oder das Walzeinstechen nach Anspruch 5 oder 6, **dadurch gekennzeichnet, dass** die Anordnung diametral angeordnete, axial verschiebbar gelagerte, angetriebene oder nicht angetriebene Außen-Profilwalzwerkzeuge (2) aufweist.

8. Anordnung für das Radial-Axial-Profilrohrwalzen und/oder das Walzeinstechen nach einem der Ansprüche 5 bis 7, **dadurch gekennzeichnet, dass** die Außen-Profilwalzwerkzeuge (2) zur Vermeidung radialer Kräfte auf die Spindellagerung, auf einer gemeinsamen Grundplatte angeordnet sind.

9. Anordnung für das Radial-Axial-Profilrohrwalzen und/oder das Walzeinstechen nach einem der Ansprüche 5 bis 8, **dadurch gekennzeichnet, dass** die Außen-Profilwalzwerkzeuge (2) mit einer radialen Vorschubkraft zustellbar sind, die das Eindringen in das Rohr (1) bewirkt.

10. Anordnung für das Radial-Axial-Profilrohrwalzen und/oder das Walzeinstechen nach Anspruch 5, **dadurch gekennzeichnet, dass** die Innenprofilwalzwerkzeuge (3) mit einer radialen Vorschubkraft zustellbar sind, die das Eindringen in das Rohr (1) bewirkt.

11. Anordnung nach einem der Ansprüche 5 oder 6, **dadurch gekennzeichnet, dass** bei einem mehrspindeligen Drehautomaten die Walzvorrichtung mit einem Außen-(2) und einem Innen-Profilwalzwerkzeug (3) in einer Spindellage vorgesehen ist.

12. Anordnung nach einem der Ansprüche 5 bis 11, **dadurch gekennzeichnet, dass** bei einer Kombination aus wenigstens einer Profilwalzmaschine und einer Drehmaschine der Profilwalzmaschine ein oder mehrere spanende Bearbeitungseinrichtungen oder Drehmaschinen zugeordnet sind, die den Ring nach der umformenden Profilierung durch Radial-Axial-Profilrohrwalzen sofort umformend und/oder spanend vom Rohr abtrennen und die spanende Fertigbearbeitung des Ringes erst im bereits vom Rohr abgetrennten Zustand, mit Übergabe des abgetrennten und vorprofilierten Ringes an die nachgeschalteten spanenden Bearbeitungseinrichtungen oder Drehmaschinen ohne Zwischenlagerung erfolgt.

13. Anordnung nach einem der Ansprüche 5 bis 12, **dadurch gekennzeichnet, dass** die Profilwalzwerkzeuge (2; 3) vermittels jeweils zugeordneter Hydraulikkolben (7) und Hydraulikzylinder (8) axial verschiebbar sind.

14. Anordnung nach Anspruch 13, **dadurch gekennzeichnet, dass** das Innen-Profilwalzwerkzeug (3) mit dem Gegendruckwerkzeug (5) vermittels einer druckbeaufschlagbaren Kolben-Zylinderanordnung mit dem Kreuzschlitten (10) verbunden ist.

## Claims

1. A method for manufacturing internally and/or externally profiled rings in completely grinding-ready state from pipe material or solid material, in which machine-cutting methods and radial-axial pipe roll forming and/or roll grooving are combined with one another sequentially and/or parallel, wherein during rolling of the profiles a counterforce relative to the axial flow direction of the pipe material (1) is generated so that the material flow in axial and/or radial direction can be controlled such that the flowing material is incorporated into the shaping of the profile and the control of the axial material flow is realized by additional promotion or limitation of the axial movability of the outer profile rolling tool (2) by hydraulic and/or mechanical means.

2. The method according to claim 1, **characterized in that** the control of the material flow is realized by a counterpressure tool (5) which counteracts an unhindered axial material flow by a defined force being applied and, as a result of this, directs the material flow optionally in the axial and/or radial direction.

3. The method according to one of the claims 1 or 2, **characterized in that** for realizing a two-ring or multi-ring machining in accordance with the outer contour simultaneously two or several rings are rolled with a pre-ring, wherein first a ring profile remaining on the pipe is rolled by (radial) axial pipe roll forming and/or roll grooving and, subsequently, rolling of additional ring profiles is carried out so that several rolled ring profiles are generated on the pipe (1), wherein the last ring profile remains on the pipe while the upstream ring profiles are finished by machine-cutting and subsequently separated from the pipe, and serves as the pre-ring during the subsequently repeated processing course.

4. The method according to one of the claims 1 to 3, **characterized in that** the inner and/or outer profiling of the ring is performed with a single clamping action.

5. An arrangement for performing a method for manufacturing of internally and/or externally profiled rings in a completely grinding-ready state from pipe material or solid material, in which machine-cutting methods and radial-axial pipe roll forming and/or roll grooving are combined with one another sequentially and/or parallel, wherein the arrangement comprises an inner profile rolling tool (3) and at least one outer profile rolling tool (2) **characterized in that** the inner profile rolling tool (3) has an axially movable counterpressure tool (5) limiting the material flow and forming a contact surface for the pipe (1) projecting past the outer diameter of the inner profile rolling tool (3) so that the material flow is controllable in the axial and/or radial direction and the outer profile rolling tool is promoted or limited in its axial movability by a hydraulic and/or a mechanical system so that the axial material flow is controlled.

6. An arrangement for radial-axial pipe roll forming and/or roll grooving according to claim 1 or 5, with at least one outer profile rolling tool (2) and one counter-pressure tool (5) for controlling material flow, whereby the axial material flow is partly hindered and hence partly directed in radial direction.

7. The arrangement for radial-axial pipe roll forming and/or roll grooving according to claim 5 or 6, **characterized in that** the arrangement has diametrically arranged axially movably supported, driven or non-driven, outer profile rolling tools (2).

8. The arrangement for radial-axial pipe roll forming and/or roll grooving according to one of the claims 5 to 7, **characterized in that** the outer profile rolling tools (2) are arranged on a common base plate for avoiding radial forces on the spindle bearing.

9. The arrangement for radial-axial pipe roll forming and/or roll grooving according to one of the claims 5 to 8, **characterized in that** the outer profile rolling tools (2) can be advanced by a radial advancing force that effects the penetration into the pipe (1).

10. The arrangement for radial-axial pipe roll forming and/or roll grooving according to claim 5, **characterized in that** the inner profile rolling tools (3) can be advanced by a radial advancing force that effects the penetration into the pipe (1).

11. The arrangement according to one of the claims 5 or 6, **characterized in that**, in the case of a multi-spindle automatic lathe, the rolling device is provided with an outer profile rolling tool (2) and inner profile rolling tool (3) in one spindle position.

12. The arrangement according to one of the claims 5 to 11, **characterized in that**, for a combination of at least one profile rolling machine and an lathe, the profile rolling machine has correlated therewith one or several processing devices for machine-cutting or turning devices that separate the ring from the pipe, immediately after profiling by forming by radial-axial pipe roll forming, by forming and/or by machine-cutting, and the finishing operation by machine-cutting of the ring is realized after it is already separated from the pipe, including transfer of the separated and pre-profiled ring to the downstream processing devices for machine-cutting or lathes without intermediate storage.

13. The arrangement according to one of the claims 5 to 12, **characterized in that** the profile rolling tools (2, 3) are axially movable by means of correlated hydraulic pistons (7) and hydraulic cylinders (8), respectively.

14. The arrangement according to claim 13, **characterized in that** the inner profile rolling tool (3) with the counterpressure tool (5) is connected by means of a pressure-loadable piston cylinder arrangement to the compound slide (10).

## Revendications

1. Procédé de fabrication de bagues profilées à l'intérieur et/ou à l'extérieur, à l'état de rectification fini et à partir de matériau tubulaire ou plein, selon lequel on combine entre eux en série et/ou en parallèle des procédés d'enlèvement de matière et le laminage radial/axial de tubes profilés et/ou la rectification en plongée, sachant qu'on produit pendant le laminage du profil une force antagoniste par rapport à la direction axiale d'écoulement du matériau tubulaire (1), de sorte que le flux de matériau peut être commandé en direction axiale et/ou radiale de telle sorte que le matériau qui s'évacue est inclus dans la formation du profil, et sachant que la commande du flux axial de matériau est en outre réalisée au moyen d'un encouragement ou d'une limitation supplémentaire de la faculté de translation axiale des outils (2) de laminage du profil extérieur par des moyens hydrauliques et/ou mécaniques.

2. Procédé selon la revendication 1, **caractérisé en ce que** la commande du flux de matériau s'effectue au moyen d'un outil de contre-pression (5) qui s'oppose à un flux de matériau axial sans entrave avec une force à exercer de manière définie, et qui produit donc le flux de matériau au choix en direction axiale et/ou radiale.

3. Procédé selon la revendication 1 ou 2, **caractérisé en ce que**, afin de réaliser un usinage de deux bagues ou davantage selon le contour extérieur, on lamine simultanément deux bagues ou davantage avec une pré-bague, par le fait qu'un profil annulaire restant sur le tube est d'abord laminé par laminage (radial/)axial de tubes profilés et/ou par rectification en plongée, à la suite de quoi l'on effectue le laminage d'autres profils annulaires, de sorte que plusieurs profils annulaires laminés sont produits sur le tube (1), sachant que le dernier profil annulaire, tandis que les profils annulaires précédents sont soumis à un usinage de finition par enlèvement de matière puis sont détachés du tube, reste sur le tube et forme la pré-bague lors du processus de fabrication qui se répète ensuite.

4. Procédé selon l'une des revendications 1 à 3, **caractérisé en ce que** le profilage intérieur et/ou extérieur de la bague est effectué dans un moyen de serrage.

5. Dispositif pour la mise en oeuvre d'un procédé de fabrication de bagues profilées à l'intérieur et/ou à l'extérieur, à l'état de rectification fini et à partir de matériau tubulaire ou plein, selon lequel on combine entre eux en série et/ou en parallèle des procédés d'enlèvement de matière et le laminage radial/axial de tubes profilés et/ou la rectification en plongée, sachant que le dispositif comprend un outil (3) de profil intérieur et au moins un outil (2) de profil extérieur, **caractérisé en ce que** l'outil de profil intérieur présente un outil de contre-pression (5) axialement mobile qui limite le flux de matériau et qui forme une surface d'appui, dépassant du diamètre extérieur de l'outil (3) de profil intérieur, pour le tube (1) à façonner, de sorte que le flux de matériau peut être commandé en direction axiale et/ou en direction radiale, et **en ce que** la faculté de translation axiale de l'outil de profil extérieur est favorisée ou limitée par un système hydraulique et/ou mécanique, de sorte que le flux de matériau axial est commandé de manière ciblée.

6. Dispositif pour le laminage radial/axial de tubes profilés et/ou la rectification en plongée selon la revendication 1 ou 5, avec au moins un outil (2) de laminage du profil extérieur et avec un outil de contre-pression (5) pour commander le flux de matériau, de sorte que le flux de matériau axial est partiellement entravé et donc partiellement dirigé en direction radiale.

7. Dispositif pour le laminage radial/axial de tubes profilés et/ou la rectification en plongée selon la revendication 5 ou 6, **caractérisé en ce que** le dispositif présente des outils (2) de laminage du profil extérieur diamétralement disposés, montés à translation axiale et entraînés ou non entraînés.

8. Dispositif pour le laminage radial/axial de tubes profilés et/ou la rectification en plongée selon l'une des revendications 5 à 7, **caractérisé en ce que** les outils (2) de laminage du profil extérieur sont disposés sur une plaque de base commune, afin d'éviter des forces radiales sur le palier de broche.

9. Dispositif pour le laminage radial/axial de tubes profilés et/ou la rectification en plongée selon l'une des revendications 5 à 8, **caractérisé en ce que** les outils (2) de laminage du profil extérieur peuvent être approchés avec une force d'avance radiale qui produit la pénétration dans le tube (1).

10. Dispositif pour le laminage radial/axial de tubes profilés et/ou la rectification en plongée selon la revendication 5, **caractérisé en ce que** les outils (3) de laminage du profil intérieur peuvent être approchés avec une force d'avance radiale qui produit la pénétration dans le tube (1).

11. Dispositif selon la revendication 5 ou 6, **caractérisé en ce que**, dans le cas d'un tour automatique d'usinage à plusieurs broches, le dispositif de laminage pourvu d'un outil (2) de laminage du profil extérieur et d'un outil (3) de laminage du profil intérieur est prévu dans une position de broche.

12. Dispositif selon l'une des revendications 5 à 11, **caractérisé en ce que**, dans le cas d'une combinaison d'au moins un laminoir à profiler et un tour d'usinage, un ou plusieurs tours d'usinage ou dispositifs d'usinage par enlèvement de matière sont associés au laminoir à profiler et, à la suite du profilage de formage par laminage radial/axial de tubes profilés, ils détachent immédiatement la bague du tube par formage et/ou par enlèvement de matière, et l'usinage de finition par enlèvement de matière a lieu seulement dans l'état déjà détaché du tube, avec remise de la bague détachée et pré-profilée aux tours d'usinage ou dispositifs d'usinage par enlèvement de matière montés en aval, sans entreposage intermédiaire.

13. Dispositif selon l'une des revendications 5 à 12, **caractérisé en ce que** les outils (2 ; 3) de laminage du profil sont à translation axiale au moyen de pistons hydrauliques (7) et de cylindres hydrauliques (8) qui leur sont respectivement associés.

14. Dispositif selon la revendication 13, **caractérisé en ce que** l'outil (3) de laminage du profil intérieur pourvu de l'outil de contre-pression (5) est relié au chariot croisé (10) au moyen d'un ensemble piston-cylindre pouvant être alimenté en pression.
